# EUROPEAN PATENT APPLICATION

(11) **EP 2 887 619 A1**
(43) Date of publication of application: **24.06.2015**
(21) Application number: 13198281.1
(22) Date of filing: 19.12.2013
(51) Int. Cl.: H04L 29/08, H04W 4/00

(54) **Remote low consumption data acquisition device**

(71) Applicant: Fundación Instituto Tecnológico de Galicia, 15190 - Mesoiro A Coruna (ES)
(72) Inventor: López González, Lucía, 15190 Mesoiro - A Coruña (ES); Castromán Porto, Juan Luis, 15190 Mesoiro - A Coruña (ES); Giraldo Rodriguez, Carlos, 15190 Mesoiro - A Coruña (ES); Pérez Iglesias, Héctor, 15190 Mesoiro - A Coruña (ES)
(74) Representative: Carvajal y Urquijo, Isabel

(57) **Abstract**

Remote low consumption data acquisition device, comprising:
- an SBC (100) with multiple connection interfaces,
- a PCB (140) with:
• a plurality of connectors (148) for connecting various sensors and actuators,
• at least one ADC converter (144),
• a control module (146) for supplying the sensors and actuators via various supply lines,
• a microcontroller (142) for managing the sensors, actuators and pieces of communication equipment connected to the device.

The device implements a modular software architecture split into a core (200), plugins (210) for the specific implementation of each sensor and actuator built into the device and REST services (220).

## Description

### Invention field

The present invention falls within the field of pieces of electronic equipment for remote data capture, monitoring and control in various sensors and actuators, over the internet.

### Background of the invention

There are currently very few capture devices which are both flexible and may be scaled in order to incorporate various commercial sensors and actuators. Moreover, those that do possess these properties are closed to a certain set of protocols and/or specific manufacturers (limited flexibility), as well as to a maximum number of connections (limited scalability). Furthermore, very few are capable of sending data and managing the pieces of equipment remotely over the internet.

Therefore, the need for a piece of capture equipment capable of building any commercial sensor or actuator into it arises. These pieces of equipment are furthermore required to be scalable, in order to incorporate new sensors/actuators in the future, in addition to the possibility of managing them and sending data remotely over the internet. Meanwhile, they should have very low consumption.

### Description of the invention

The present invention refers to a low consumption electronic assembly with capture and communications software, which makes it possible to monitor and control all kinds of commercial sensors and actuators remotely over the internet, in heterogeneous application environments.

The remote low consumption data acquisition device comprises:
- an SBC (Single Board Computer) with multiple connection interfaces,
- a PCB (Printed Circuit Board) with:
   - a plurality of connectors for connecting various sensors and actuators,
   - at least one ADC converter,
   - a control module for supplying the sensors and actuators via various supply lines,
   - a micro-controller, configured to manage the sensors, actuators and pieces of communication equipment connected to the device.

In another preferred embodiment, the indicated elements of the PCB and SBC may be fused into one single board, rather than there being two independent boards connected to one another.

The device implements a modular software architecture, divided into the core, plugins for the specific implementation of each sensor and actuator built into the device, in addition to REST services. The core comprises the following modules:
- a features manager module for managing the geographic positioning of the elements connected to the device,
- a sensor manager module for managing the sensors connected to the device,
- an actuator manager module for managing the actuators connected to the device,
- a timers manager module for making periodic calls to other modules' services,
- a store manager module, charged with supplying a data base with the data captured by the device.

The plugins are expandable modules, configured according to the pieces of equipment connected to the device. The base plugins are as follows:
- an analog sensor plugin, for controlling an analog sensor, to which an analog channel for an ADC converter pertaining to the device is assigned,
- a digital sensor plugin, for controlling a digital sensor, to which a RS-232 communications port pertaining to the device is assigned,
- an RS-485 sensor plugin, for controlling a digital sensor to which an RS-485 communications port pertaining to the device is assigned,
- an actuator plugin for configuring and assigning an actuator's tasks,
- a dumper plugin for entering observations into an external server.

The REST services form an API for accessing services pertaining to other modules. These services are detailed below:
- a port configuration resource for obtaining the configurations of the external ports,
- a sensors resource for consulting the sensors available in the device
- an FOI resource, for consulting the Features of Interest registered on the device,
- a timers resource for consulting the groups for the device's periodic tasks, an observations resource for consulting the observations stored in the device's local database,
- an actuators resource for consulting the actuators available in the device.

The advantages of the present invention, amongst others, are as follows:
- Open HW and SW architecture, in such a way that it provides complete flexibility and enables the solution to be scaled to new pieces of equipment (sensors and actuators) and adapted to needs (e.g. new integration interfaces).
- API REST for accessing and modifying detailed information on the state and configuration of the system.
- Multiple interfaces available (digital and analog) for connecting devices, with the possibility of expansion.
- Supplying the sensors and actuators via the RME DAQ equipment itself. Various supply lines (5, 12 and 24V).
- Very low consumption, which makes it possible to program the shutdown of sensors and actuators and even of the RLE DAQ equipment itself.
- Simple initial configuration via a local web interface, which may be accessed via the ETH port.
- The possibility of remote management over the internet, by means of connecting a piece of external equipment (such as an ADSL router, a 3G/GPRS modem, etc.).
- Easy to connect sensors and actuators using homogeneous connectors, in addition to configuration via the local web interface.
- The possibility of modifying the sample locally and remotely/ updating the pieces of equipment periodically.
- The possibility of requesting samples (or actuating) upon request.
- The possibility of sending the data stored to a remote web server and/or of saving it to a pen drive locally it in ".csv" format.
- The possibility of calibrating sensors via the Local web Interface.
- The possibility of configuring a list of sample areas and selecting that which is currently operative.
- The possibility of configuring movement alerts, in the event of an external GPS device being connected.
- The possibility of checking data on the RME DAQ state, via the Local web Interface.

### Brief description of the drawings

Below is a brief description of a series of drawings, which facilitate a better understanding of the invention and which relate expressly to an embodiment thereof, presented as a non-limiting example of the same.
Figure 1 represents the hardware architecture of the invention.
Figure 2 represents the software architecture of the invention.

### Detailed description of the invention

The basic function of the RLE DAQ (Remote Low Energy Data Acquisition System) is understood to be that of a data logger, with a variable number of built in sensors and actuators, which communicates with a web server over the internet in a programmed manner, in order to enter samples.

Given that it makes it possible to integrate sensors which measure parameters of a different nature, a sample outline is enabled, which may be configured for each kind of sensor. In this way, it is possible to obtain greater temporal resolution in those parameters with greater variation and to save on consumption and useful life in the sensors that measure values with little variation, given that the sensors are disconnected from the supply system between measurement cycles. This very behavior is replicated in the case of the actuators, it being possible to configure their actuation pattern both individually or collectively.

Once the sample outline for the pieces of equipment has been configured, the RLE DAQ will repeat this in a cycle provided that it is not modified, saving a register of all the operations carried out in the memory, as well as of the variables captured. In this way, an autonomous behavior as a data logger is guaranteed, even in the event of communication with the web server being lost over an undefined period of time.

In applications in which the lowest consumption possible is sought, the RLE DAQ may be configured so that for the large part of the time, it is switched off. In this case, it would only be turned on during the active cycles (each time measurements must be taken, an actuator activated or a connection made with the remote web server). Depending on the need to make data available in real time, it may not be necessary to send the data to the server in all active cycles. For many applications, daily connection to the server is sufficient, which makes it possible to make further savings on consumption. In any case, the RLE DAQ will automatically send all the samples to the remote web server, each time communication is established with it. In contrast, in applications wherein consumption is not very strict or where a remote connection to the RLE DAQ must be established from the outside at any moment, the DAQ may be configured so that this is permanently switched on and accessible.

Each time the RLE DAQ is programmed to connect to the server, it will also send all the samples stored in the memory, basic information from its internal state. Furthermore, benefit is derived from these connections in order to reprogram the RLE DAQ according to the new configuration assigned from the remote web server.

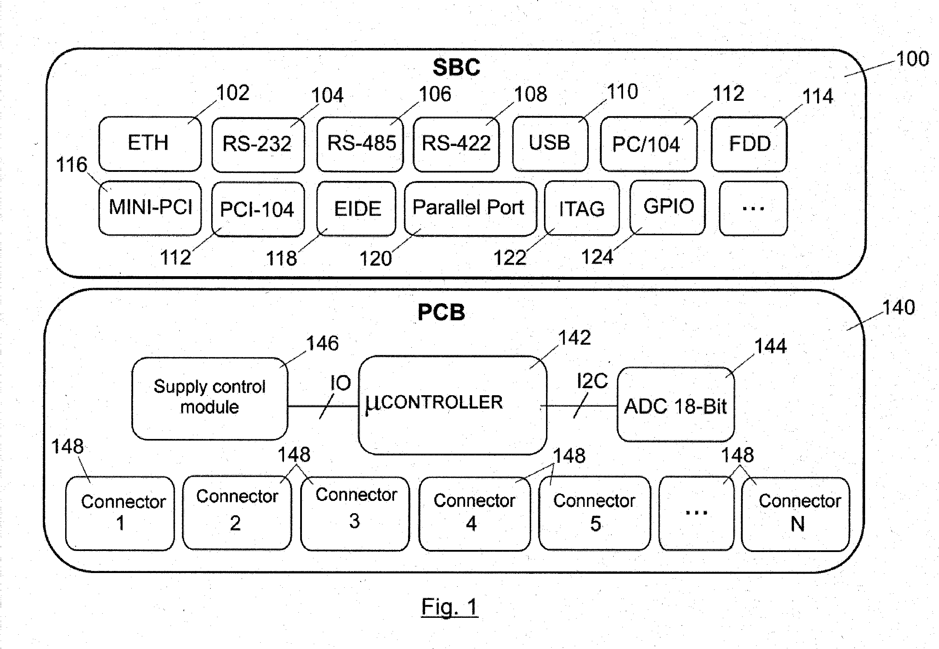

The RLE DAQ hardware is formed by a SBC (Single Board Computer), (100), which is shown in **Figure 1****,** with a low consumption processor and a memory which houses an operating system, as well as specific software, with multiple connection interfaces, namely: Ethernet (102), RS-232 (104), RS-485 (106), RS-422 (108), USB (110), PC- 104 (112), FDD (114), Mini-PCI (116), EIDE (118), parallel port (120), JTAG (122), GPIO (124), etc.

The RLE DAQ hardware is furthermore formed by an electronic plate 140, which facilitates the connection and integration of sensors and actuators by means of homogeneous connectors 148, in such a way that they may be connected indistinctly in any available port, this being indicated via the software configuration interface. Said plate 140 also has a built in microcontroller 142, which grants I2C access to a multi-channel 18 bit precision ADC 144 and I/O access to a control module 146 for the supply lines for the various pieces of equipment (5, 12 and 24 VDC).

Connection to the internet is established by means of pieces of external equipment (such as an ADSL router, a 3G/GPRS modem, etc.), which are connected via one of the interfaces in the hardware core, namely: Ethernet, USB, COM, mini PCI and PC-104.

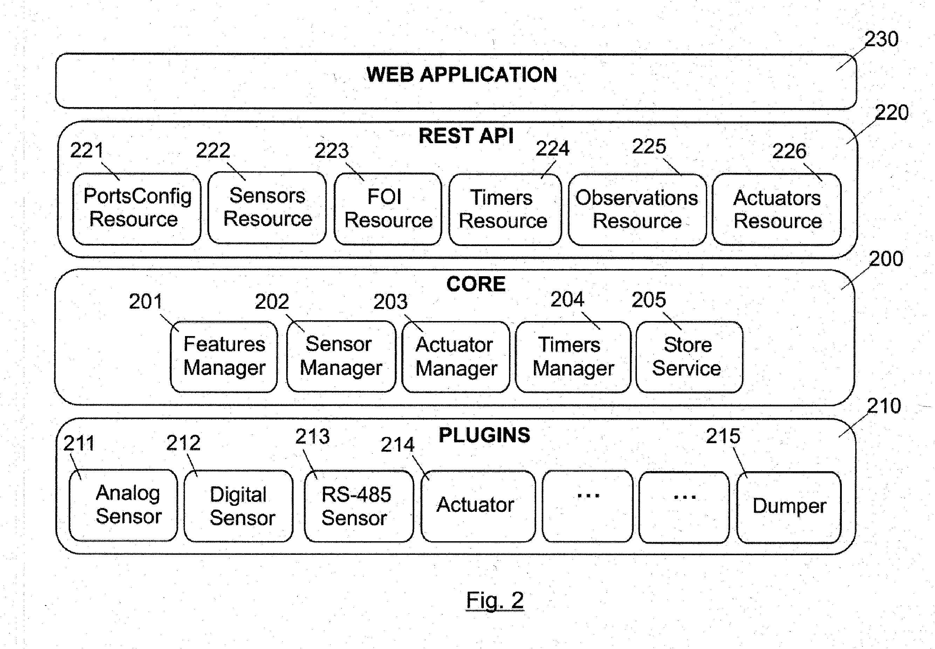

Sensors, actuators and pieces of communication equipment connected to the RLE DAQ are managed via modular software, in a service oriented architecture. The software may thus be divided into independent modules that provide services to the rest. **Figure 2** represents the software architecture of the RLE DAQ, divided into three large blocks, namely: core 200, plugins 210 and REST (Representational State Transfer) services 220.

The core 200 comprises the following modules:
- Features manager module 201: This module manages the elements relative to geographic position, such as areas where samples are commonly taken and which are referred to as Features of Interest (FOI), following the *sensorweb* concepts or sending alerts in the event of the RLE DAQ moving. This module makes it possible to request a list of common sampling FOIs, to add new FOIs and to select the FOI by means of system default. The services it offers are as follows:
   - Obtaining the system FOIs (identifier and geographic position).
   - Creating a new FOI.
   - Selecting the FOI by default.
- Sensor manager module 202: This module serves to manage the sensors present in the system. It stores both sensors built into the system (such as battery level measuring sensors) and sensors which may be added to and removed from the system via the external connection ports. It also manages the ADCs present in the system. The services it offers are as follows:
   - Obtaining the identifiers for the sensors connected to the system.
   - Obtaining a sensor based on its identifier.
   - Updating the sensors connected to the external ports.
   - Updating the configuration of a sensor (such as calibration constants, related FOI, etc.).
- Actuator manager module 203: This module manages the actuators present in the system. It stores both built in actuators (such as relay switches or transistors) and actuators which may be connected to the external ports. The services it offers include:
   - Obtaining the identifiers for the actuators connected to the system.
   - Obtaining the commands admitted by an actuator based on its identifier.
   - Sending actuation commands to actuators.
- Timers manager module 204: This module is responsible for periodically calling other module services. The system has a pre-configured number of groups (four by default). Each group is run periodically and may be configured by the user (for example every 10 minutes, every 30 minutes or every hour). In addition, the group has a list of services which will be called when the group should be carried out, which may also be configured by the user. The services may be sensor sampling, actuator commands or sending stored samples to remote servers. The services it offers are as follows:
   - Obtaining identifiers for the system's groups.
   - Obtaining the configuration for a group in the system according to its identifier.
   - Changing the cron expression, which defines the frequency with which the group's tasks are carried out.
   - Changing the sensors and actuator tasks linked to the group.
- Store manager module 205: This module is charged with persistence of the database. The data the system needs to persist is relative to the configuration of the sensors and actuators, the configuration of the groups, the FOI and the observations (*sensorweb* concept equivalent to samples) of the sensors. The services it offers are as follows:
   - Saving or updating a sensor's configuration.
   - Obtaining a sensor's configuration according to its identifier.
   - Saving the commands admitted by a sensor.
   - Obtaining the commands admitted by a sensor.
   - Saving or updating the configuration of a timing group.
   - Obtaining the configuration of a timing group.
   - Saving an observation made by a sensor.
   - Obtaining the observations stored.

The plugins (210) are the specific implementations of each sensor or actuator built into the system, as are the modules for entering observations into a remote information system. The plugins may be of the following varieties:
- Analog sensor plugin 211: analog sensor to which an analog cannel of one of the ADCs of the system is assigned in the configuration thereof. The plugin transforms the digital value offered by the ADC via its specific formulae and calibration constants. It offers the *PerformSyncMeasure* service, which makes it possible to request a sample from the sensor in a synchronized way. A web application 230, for example, may call this method in order to request samples from the associated sensor. In default operation, the Timers Manager module 204 calls this service in order for it to carry out the periodic sampling.
- Digital sensor plugin 212: Digital sensor to which a COM port series RS-232 of the RLE DAQ is assigned, via the configuration thereof. The plugin communicates using the specific protocol of the digital sensor. It offers the *PerformSyncMeasure* service.
- RS485 sensor plugin 213: Digital sensor that uses the RS-485 bus of the RLE DAQ. The plugin communicates using the specific protocol of the digital sensor. It offers the *PerformSyncMeasure* service.
- Actuator plugin 214: Actuator that admits the assigning of tasks. The plugin communicates using the specific system of the actuator (series port, GPIO, 12C, etc.). It offers the *getTaskingConfiguration* service (returning commands admitted by the actuator) and the *submitTask* service, in order to receive the specific command.
- Dumper plugin 215: Plugin for introducing observations into an external server. Each plugin of the dumper variety will implement the protocol defined in the external server on introducing samples. An example of a dumper plugin is the *SOSDumper,* a plugin which introduces the observations into a remote Sensor Observation Service (or SOS, according to the standard defined in the OGC web sensor).

As far as the REST services 220 are concerned, there is a series of modules which implement an API REST for accessing the services defined above. The following REST resources have been defined:
- Port configuration resource 221: resource which enables the potential configurations of the external RLD DAQ ports to be obtained, in addition to updating said configurations to indicate the sensors that have been connected to the external ports. The resource communicates with the sensor manager 202 in order to let it know which sensors are connected. The sensors are added by default to the first group of timers.
- Sensors resource 222: Resource which enables the sensors available in the system to be consulted. The configuration and last observation captured thereof may also be consulted and the calibration constants of the same or the FOI on that which observations are being made may be updated.
- FOI resource 223: Resource which enables the Features of Interest registered in the system to be consulted and new Features of Interest to be added, in addition to selecting the Feature of Interest by default.
- Timers resource 224: Resource which enables the groups for periodic system tasks to be consulted. It enables the frequency of each group to be configured, in addition to the sensors and actuators that form part of each group.
- Observations resource 225: Resource which enables the observations found in the local RLE DAQ database to be consulted. The output format may be *JavaScript Object Notation (JSON)* or *Comma Separated Values (CSV).*
- Actuators resource 226: Resource which enables the actuators available in the system and the commands they admit to be consulted, in addition to how to run commands on the same.

## Claims

1. Remote low consumption data acquisition device, **characterized in that** it comprises:
- an SBC (100) with multiple connection interfaces,
- a PCB (140) with:
• a plurality of connectors (148) for connecting various sensors and actuators,
• at least one ADC converter (144);
• a control module (146) for controlling the supply of the sensors and actuators via various different supply lines,
• a micro-controller (142) configured to manage the sensors, actuators and pieces of communication equipment connected to the device
**and in that** the device implements a modular software architecture split into a core (200), plugins (210) for specifically implementing each sensor and actuator built into the device and REST services (220), wherein the core (200) comprises the following modules:
- a features manager module (201) for managing the geographic positioning of the elements connected to the device,
- a sensor manager module (202) for managing the sensors connected to the device,
- an actuator manager module (203) for managing the actuators connected to the device,
- a timers manager module (204) for running periodic calls to other module services,
- a store manager module (205) responsible for storing the data captured by the device in a database.

2. Device according to claim 1, wherein the plugins (210) are specific to the concrete configuration and comprise at least one of the following:
- an analog sensor plugin (211) for controlling an analog sensor, to which an analog ADC converter channel (144) pertaining to the device is assigned,
- a digital sensor plugin (212) for controlling a digital sensor to which a RS-232 communications port pertaining to the device is assigned,
- an RS-485 sensor plugin (213) for controlling a digital sensor to which an RS-485 communications port pertaining to the device is assigned,
- an actuator plugin (214) for configuring and assigning tasks relative to an actuator,
- a dumper plugin (215) for introducing observations into an external server.

3. Device according to any of the previous claims, wherein the REST services (220) implement an API REST for accessing other module services, including:
- a port configuration resource (221) for obtaining the configurations of the external ports,
- a sensors resource (222) for consulting the sensors available in the device,
- an FOI resource (223) for consulting the Features of Interest registered in the device,
- a timers resource (224) for consulting the groups for the periodic tasks pertaining to the device,
- an observations resource (225) for consulting the observations stored in the local database pertaining to the device,
- an actuators resource (226) for consulting the actuators available in the device.

4. Device according to any of the previous claims, wherein the connection interfaces are selected from the following:
- Ethernet (102),
- RS-232 (104),
- RS-485 (106),
- RS-422 (108),
- USB (110),
- PC/104 (112),
- FDD (114),
- Mini-PCI (116),
- EIDE (118),
- parallel port (120),
- JTAG (122),
- GPIO (124).

5. Device according to any of the previous claims, wherein the supply lines for the various sensors and actuators are 5, 12 and 24 VDC.
